# FASCICULE DE BREVET EUROPEEN

(11) **EP 3 685 216 B1**
(45) Date de publication et mention de la délivrance du brevet: **06.04.2022**
(21) Numéro de dépôt: 18774008.9
(22) Date de dépôt: 20.09.2018
(51) Int. Cl.: G02B 27/28, G02B 27/01

(54) **DISPOSITIF D'AFFICHAGE TÊTE HAUTE**
HEAD-UP-ANZEIGEVORRICHTUNG
HEAD-UP DISPLAY DEVICE

(30) Priorité: 20.09.2017 FR 1758713
(43) Date de publication de la demande: 29.07.2020
(73) Titulaire: Valeo Comfort and Driving Assistance, 94046 Créteil Cedex (FR)
(72) Inventeur: GRANDCLERC, François, 94046 Créteil Cedex (FR); ALRIC, Jean-Christophe, 94046 Créteil Cedex (FR); HUSSON, Arnaud, 94046 Créteil Cedex (FR); DELPIERRE, Laurent, 94046 Créteil Cedex (FR)
(74) Mandataire: Delplanque, Arnaud
(86) Numéro de dépôt international: PCT/EP2018/075543
(87) Numéro de publication internationale: WO 2019/057860

(56) Documents cités:
- EP-A2- 0 571 192
- WO-A2-2011/066890
- US-A1- 2017 139 206
- US-A1- 2017 261 746

## Description

La présente invention concerne de manière générale les systèmes d'affichage tête haute, notamment dans un véhicule.

Elle concerne plus particulièrement un dispositif d'affichage tête haute.

### ARRIERE-PLAN TECHNOLOGIQUE

Un dispositif d'affichage tête haute installé dans un véhicule comprend généralement une unité de génération d'image émettant un faisceau lumineux et au moins un élément optique destiné à projeter ce faisceau lumineux en direction d'une lame partiellement transparente. Le faisceau lumineux est ensuite réfléchi par la lame partiellement transparente en direction des yeux du conducteur du véhicule.

On connait du document JP2012103331 un dispositif d'affichage tête haute permettant la visualisation de l'image transmise y compris lorsque le conducteur porte des lunettes polarisantes. Le conducteur sélectionne un mode lui permettant d'indiquer s'il porte des lunettes polarisantes ou non, la polarisation du faisceau lumineux produit étant alors adaptée au mode sélectionné.

Par construction d'un tel dispositif d'affichage tête haute, un rayonnement extérieur, par exemple le rayonnement solaire, peut emprunter un trajet inverse à celui utilisé par ledit faisceau lumineux et être transmis vers l'unité de génération d'image. Un risque d'échauffement de cette unité est alors possible.

### OBJET DE L'INVENTION

Afin de remédier à l'inconvénient précité de l'état de la technique, la présente invention propose d'améliorer la conception du dispositif d'affichage tête haute, en particulier pour réduire les risques d'échauffement des différents composants.

Plus particulièrement, on propose selon l'invention un dispositif d'affichage tête haute selon la revendication 1.

Un tel filtre polarisant permet de réduire de moitié la puissance d'un éventuel rayonnement extérieur présent au niveau du filtre polarisant après être entré dans le dispositif d'affichage tête haute en suivant le trajet inverse de la lumière. Il permet ainsi de limiter l'échauffement de l'unité de génération d'image.

De plus, le positionnement du filtre polarisant entre l'unité de génération d'image et la cellule à cristaux liquides permet de conserver une polarisation du faisceau lumineux adaptée à la visualisation de l'image produite, que le conducteur porte des lunettes polarisantes ou non.

D'autres caractéristiques non limitatives et avantageuses du dispositif d'affichage tête haute conforme à l'invention, prises individuellement ou selon toutes les combinaisons techniquement possibles, sont les suivantes :
- le filtre polarisant est placé en regard dudit polariseur de sortie ;
- au moins un axe de transmission du filtre polarisant et au moins un axe de transmission du polariseur de sortie sont alignés ;
- le filtre polarisant et la cellule à cristaux liquides sont accolés ;
- au moins une face de la cellule à cristaux liquides porte une couche antireflet ;
- la distance entre l'unité de génération d'image et le filtre polarisant est supérieure à 2 mm (par exemple comprise entre 2 mm et 30 mm) ;
- au moins une face du filtre polarisant porte une couche antireflet ;
- ledit dispositif comporte au moins un miroir, interposé sur le trajet dudit faisceau lumineux ;
- ledit miroir comporte un traitement en surface permettant l'absorption du rayonnement infrarouge ;
- la cellule à cristaux liquides est placée entre le filtre polarisant et le miroir sur le trajet du faisceau lumineux ;
- le miroir est placé entre le filtre polarisant et la cellule à cristaux liquides sur le trajet du faisceau lumineux.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un premier exemple de dispositif d'affichage tête haute selon l'invention ; et
- la figure 2 représente un second exemple de dispositif d'affichage tête haute selon l'invention.

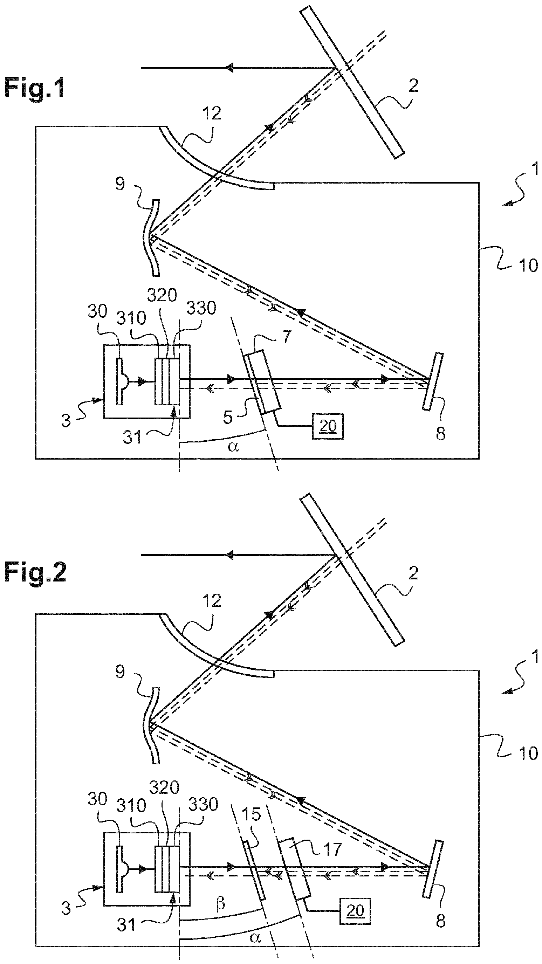

La figure 1 représente un premier exemple de dispositif d'affichage tête haute 1 équipant un véhicule, par exemple un véhicule automobile.

Le dispositif d'affichage tête haute 1 comprend un boitier 10 et une fenêtre de protection 12. Le boitier 10 permet de protéger les éléments que le dispositif 1 contient de diverses détériorations extérieures (poussière, chute d'objet depuis l'habitacle du véhicule, etc).

La fenêtre de protection 12 permet le passage d'un faisceau lumineux provenant de l'intérieur du boitier 10 vers l'extérieur dudit boitier 10 tout en protégeant les éléments que contient le dispositif d'affichage tête haute 1. La fenêtre de protection 12 clôt une ouverture du boitier 10.

Le dispositif d'affichage tête haute 1 comprend, à l'intérieur du boitier 10, une unité de génération d'image 3, un filtre polarisant 5, une cellule à cristaux liquides 7 et des systèmes de projection du faisceau lumineux, tel qu'un miroir plan 8 et un miroir de forme libre (ou « freeform » selon l'appellation d'origine anglo-saxonne parfois utilisée) 9, par exemple asphérique.

L'unité de génération d'image 3 comporte une source de lumière 30 et un écran à cristaux liquides 31. Dans certains modes de réalisation, l'unité de génération d'image peut comprendre en outre un réflecteur. La source de lumière 30 (de même qu'éventuellement le réflecteur précité) permet(tent) de rétroéclairer l'écran à cristaux liquides 31 afin de générer un faisceau lumineux.

Le faisceau lumineux qui émerge de l'écran à cristaux liquides 31 est destiné à être projeté à l'extérieur du dispositif d'affichage tête haute 1, en direction d'une lame partiellement transparente 2. La lame partiellement transparente 2 peut correspondre par exemple au pare-brise du véhicule dans lequel est installé ledit dispositif d'affichage tête haute 1. En variante, la lame partiellement transparente 2 peut être une lame dédiée, parfois dénommée combineur. La lame partiellement transparente 2 est conçue pour réfléchir partiellement le faisceau lumineux provenant du dispositif d'affichage tête haute 1 vers un utilisateur, souvent le conducteur du véhicule.

L'écran à cristaux liquides 31 comporte un polariseur d'entrée 310, une matrice de cristaux liquides 320 et un polariseur de sortie 330. Le plan d'extension de l'écran 31 est ici sensiblement perpendiculaire à la direction du faisceau lumineux.

Le polariseur de sortie 330 contenu dans l'écran à cristaux liquides 31 impose une polarisation donnée au faisceau lumineux en sortie de l'écran à cristaux liquides 31, c'est-à-dire en sortie de l'unité de génération d'image 3. Par exemple, le polariseur de sortie 330 peut être un polariseur linéaire horizontal.

Le faisceau lumineux généré par l'unité de génération d'image 3 est dirigé ensuite vers le filtre polarisant 5. Le filtre polarisant 5 est disposé en regard du polariseur de sortie 330 de l'écran à cristaux liquides 31. Le filtre polarisant 5 est placé en dehors de la profondeur de champ du système optique de projection du dispositif 1 afin d'éviter que le filtre polarisant 5 ne soit imagé via la lame partiellement transparente 2. Le filtre polarisant 5 est typiquement situé à quelques millimètres de l'unité de génération d'image 3, par exemple à une distance comprise entre 2 mm et 30 mm.

Le filtre polarisant 5 est ici un filtre polarisant par absorption. Le filtre polarisant 5 est incliné d'un angle α par rapport au plan d'extension de l'écran 31. Cet angle traduit l'inclinaison du plan d'extension du filtre polarisant 5 par rapport au plan d'extension de l'écran 31. Au moins une des faces du filtre polarisant 5 porte une couche antireflet afin d'augmenter la transmission du faisceau lumineux et d'éviter la formation d'images parasites via la lame partiellement transparente 2.

Le filtre polarisant 5 et le polarisateur de sortie 330 possèdent les mêmes caractéristiques optiques de polarisation. En particulier, au moins un axe de transmission du filtre polarisant 5 et au moins un axe de transmission du polariseur de sortie 330 sont alignés. Par axe de transmission d'un polariseur, on entend ici la direction de polarisation (rectiligne) de la lumière transmise par le polariseur.

Par exemple, si le polariseur de sortie 330 est un polariseur linéaire horizontal, le filtre polarisant 5 sera également un polariseur linéaire horizontal, dont les axes de transmission seront alignés à ceux du polariseur de sortie 330. Le filtre polarisant 5 conserve ainsi la polarisation du faisceau lumineux imposée par le polarisateur de sortie 330, sans atténuer ce faisceau lumineux.

La cellule à cristaux liquides 7 est disposée sur le trajet du faisceau lumineux après le filtre polarisant 5. La cellule à cristaux liquides 7 présente des faces d'entrée et de sortie du faisceau lumineux qui sont suffisamment étendues pour être traversées par le faisceau lumineux sans le diaphragmer.

Selon le mode de réalisation de la figure 1, la cellule à cristaux liquides 7 et le filtre polarisant 5 sont accolés (c'est-à-dire disposés au contact l'un de l'autre). Dans ce cas, le filtre polarisant 5 est par exemple laminé sur la cellule à cristaux liquides 7, sur la face de la cellule à cristaux liquides 7 la plus proche de l'unité de génération d'image 3.

Au moins une face de la cellule à cristaux liquides 7 (ici la face tournée vers l'aval, c'est-à-dire vers le miroir 8) porte une couche antireflet afin d'augmenter la transmission du faisceau lumineux et d'éviter la formation d'images parasites via la lame partiellement transparente 2.

La cellule à cristaux liquides 7 est inclinée d'un angle α par rapport au plan d'extension de l'écran 31, qui est ici identique à l'angle d'inclinaison du filtre polarisant 5. L'angle α est non-nul et typiquement inférieur à 50°.

Sur la figure 1, les systèmes de projection du faisceau lumineux sont placés après la cellule à cristaux liquides 7 sur le trajet du faisceau lumineux. Le miroir plan 8 et le miroir de forme libre 9, disposés dans cet ordre sur le trajet du faisceau lumineux après le filtre polarisant 5, permettent de diriger le faisceau lumineux vers la lame partiellement transparente 2. Le miroir plan 8 comporte un traitement en surface permettant l'absorption du rayonnement infrarouge.

Dans ce mode de réalisation, la cellule à cristaux liquides 7 est ainsi disposée à l'amont du miroir (ici plan) 8 sur le trajet du faisceau lumineux, c'est-à-dire entre l'unité de génération d'image 3 et le miroir 8, où l'extension latérale du faisceau lumineux est limitée, ce qui permet de limiter la surface de la cellule à cristaux liquides.

En variante, seul le miroir plan 8 pourrait être présent en tant que système de projection du faisceau lumineux dans le dispositif d'affichage tête haute 1.

En variante encore, l'unité de génération d'image 3 peut être orientée de manière à diriger directement le faisceau lumineux qu'elle émet vers la lame partiellement transparente 2 (sans les systèmes de projection). Dans ce cas, la fenêtre de protection 12 peut comprendre un traitement en surface permettant l'absorption du rayonnement infrarouge.

Le dispositif d'affichage tête haute 1 est ici, après la cellule à cristaux liquides 7, dépourvu de composants optiques susceptibles de modifier la polarisation du faisceau lumineux de sorte que la polarisation en sortie du dispositif d'affichage tête haute 1 est identique à celle imposée par la cellule à cristaux liquides 7.

La cellule à cristaux liquides 7 est adaptée pour faire varier la polarisation du faisceau lumineux qui la traverse de sorte qu'en sortie le faisceau lumineux peut présenter notamment une première ou une deuxième polarisation. La cellule à cristaux liquides 7 comprend deux électrodes parallèles entourant une solution de cristaux liquides. La cellule à cristaux liquides 7 est reliée à un module de commande 20. Le module de commande 20 est conçu pour modifier la tension appliquée entre les deux électrodes parallèles. La modification de la tension entre les deux électrodes permet un basculement entre la première et la deuxième polarisation.

Le basculement peut être effectué à la suite d'une intervention de l'utilisateur, qui sélectionnera un mode indiquant s'il porte des lunettes polarisantes ou non.

Le basculement peut également être effectué automatiquement, le module de commande permettant alors par exemple une alternance périodique entre la première et la deuxième polarisation. La période de l'alternance des deux polarisations est inférieure à 0,1 seconde, de manière à ce que, grâce à la persistance rétinienne, l'utilisateur perçoit une image de luminosité sensiblement constante, qu'il porte de lunettes polarisantes ou non (et ce, sans aucune intervention de sa part).

Par principe de retour inverse de la lumière, il peut arriver qu'un rayonnement extérieur au boitier 10, typiquement un rayonnement solaire, se propage en sens inverse du faisceau lumineux issu de l'unité de génération d'image 3. Ce rayonnement extérieur traverse la fenêtre de protection 12 et se réfléchit sur les différents éléments constituant le système de projection. Ce rayonnement extérieur peut potentiellement produire un échauffement des différents composants formant le dispositif d'affichage tête haute 1 et en particulier l'unité de génération d'image 3.

La lame partiellement transparente 2 permet une atténuation substantielle du rayonnement ultraviolet du rayonnement extérieur.

Le miroir plan 8 va permettre d'obtenir une atténuation substantielle de la composante infrarouge contenue dans le rayonnement extérieur grâce audit traitement en surface.

La composante visible du rayonnement extérieur, réfléchie vers l'unité de génération d'image 3 par le miroir plan 8, est quant à elle atténuée par le filtre polarisant 5. Le facteur de transmission du filtre polarisant 5 dans le visible est de l'ordre de 50%. La présence du filtre polarisant 5 permet alors de réduire de moitié l'échauffement dû à la partie visible du rayonnement extérieur, les composantes infrarouge et ultraviolette ayant été substantiellement atténuées en amont du filtre polarisant 5.

Malgré une grande atténuation du rayonnement extérieur et les traitements antireflets du filtre polarisant 5 et de la cellule à cristaux liquides 7, une partie dudit rayonnement extérieur pourrait être réfléchie au niveau du filtre polarisant 5 et de la cellule à cristaux liquides 7 et venir perturber et atténuer le contraste de l'image obtenue via la lame partiellement transparente 2. L'inclinaison du filtre polarisant 5 et de la cellule à cristaux liquides 7 permet de diriger la réflexion parasite du rayonnement extérieur en dehors du chemin optique, vers un conduit (ou « *baffle* » selon l'appellation d'origine anglo-saxonne parfois utilisée, non représenté ici) entourant le trajet du faisceau lumineux. Le conduit absorbe donc les réflexions parasites du rayonnement extérieur.

La figure 2 représente un second exemple de dispositif d'affichage tête haute 100 conforme à l'invention.

Les éléments communs aux figures 1 et 2 portent les mêmes références et ne seront pas décrits à nouveau dans la suite.

Le dispositif d'affichage tête haute 100 comprend à l'intérieur du boitier 10 un filtre polarisant 15 et une cellule à cristaux liquides 17.

Selon le mode de réalisation présenté sur la figure 2, la cellule à cristaux liquides 17 et le filtre polarisant 15 ne sont pas accolés mais séparés. Dans ce cas, le filtre polarisant 15 peut par exemple être collé sur une lame de verre ou de Poly Carbonate transparent. Dans ce cas, ladite cellule à cristaux liquides 17 peut être disposée à une position quelconque sur le trajet dudit faisceau lumineux entre le filtre polarisant 15 et la fenêtre de protection 12. En particulier, selon des variantes non représentées, la cellule à cristaux liquides 17 peut être placée après le miroir plan 8, voire après le miroir de forme libre 9, sur le trajet du faisceau lumineux.

La surface de la cellule à cristaux liquides 17 devra éventuellement être adaptée en fonction de sa position, l'extension latérale du faisceau lumineux augmentant lorsque la cellule à cristaux liquides 17 est éloignée de l'unité de génération d'image 3.

Le filtre polarisant 15 est incliné d'un angle β par rapport au plan d'extension de l'écran 31. La cellule à cristaux liquides 17 est inclinée d'un angle α par rapport au plan d'extension de l'écran 31. L'angle d'inclinaison α peut par exemple être identique à l'angle d'inclinaison β du filtre polarisant 15.

Sur la figure 2, les systèmes de projection du faisceau lumineux sont placés après la cellule à cristaux liquides 17 sur le trajet du faisceau lumineux. Le miroir plan 8 et le miroir de forme libre 9, disposés dans cet ordre sur le trajet du faisceau lumineux après le filtre polarisant 15, permettent de diriger le faisceau lumineux vers la lame partiellement transparente 2.

## Revendications

1. Dispositif d'affichage tête haute (1 ; 100) comprenant :
- une unité de génération d'image (3) conçue pour émettre un faisceau lumineux, destiné à être projeté en sortie du dispositif d'affichage tête haute (1 ; 100) en direction d'une lame partiellement transparente (2),
- une cellule à cristaux liquides (7 ; 17) disposée sur le trajet dudit faisceau lumineux,
dans lequel l'unité de génération d'image (3) comporte un polariseur de sortie (330) et un écran (31) à cristaux liquides comportant ledit polariseur de sortie,
**caractérisé en ce qu'**il comporte un filtre polarisant (5 ; 15), interposé sur le trajet dudit faisceau lumineux entre l'unité de génération d'image (3) et la cellule à cristaux liquides (7 ; 17)
**en ce que** la cellule à cristaux liquides (7 ; 17) est inclinée d'un premier angle non-nul (α) par rapport à un plan d'extension de l'écran (31)
et **en ce que** le filtre polarisant (5 ; 15) est incliné d'un second angle non-nul (β) par rapport au plan d'extension de l'écran (31).

2. Dispositif d'affichage tête haute (1 ; 100) selon la revendication 1, dans lequel le filtre polarisant (5 ; 15) est placé en regard dudit polariseur de sortie (330).

3. Dispositif d'affichage tête haute (1 ; 100) selon l'une quelconque des revendications 1 à 2, dans lequel au moins un axe de transmission du filtre polarisant (5 ; 15) et au moins un axe de transmission du polariseur de sortie (330) sont alignés.

4. Dispositif d'affichage tête haute (1 ; 100) selon l'une quelconque des revendications 1 à 3, dans lequel le filtre polarisant (5) et la cellule à cristaux liquides (7) sont accolés.

5. Dispositif d'affichage tête haute (1 ; 100) selon l'une quelconque des revendications 1 à 4, dans lequel au moins une face de la cellule à cristaux liquides (7 ; 17) porte une couche antireflet.

6. Dispositif d'affichage tête haute (1 ; 100) selon l'une quelconque des revendications 1 à 5, dans lequel la distance entre l'unité de génération d'image (3) et le filtre polarisant (5 ; 15) est supérieure à 2 mm.

7. Dispositif d'affichage tête haute (1 ; 100) selon l'une quelconque des revendications 1 à 6, dans lequel au moins une face du filtre polarisant (5 ; 15) porte une couche antireflet.

8. Dispositif d'affichage tête haute (1 ; 100) selon l'une quelconque des revendications 1 à 7, dans lequel ledit dispositif (1 ; 100) comporte au moins un miroir (8 ; 9), interposé sur le trajet dudit faisceau lumineux.

9. Dispositif d'affichage tête haute (1 ; 100) selon la revendication 8, dans lequel ledit miroir (8 ; 9) comporte un traitement en surface permettant l'absorption du rayonnement infrarouge.

10. Dispositif d'affichage tête haute (1 ; 100) selon l'une quelconque des revendications 8 et 9, dans lequel la cellule à cristaux liquides (7 ; 17) est placée entre le filtre polarisant (5 ; 15) et le miroir (8 ; 9) sur le trajet du faisceau lumineux.

11. Dispositif d'affichage tête haute (1 ; 100) selon l'une quelconque des revendications 8 et 9 prise dans la dépendance de l'une quelconque des revendications 1 à 3 et 5 à 7 , dans lequel le miroir est placé entre le filtre polarisant et la cellule à cristaux liquides sur le trajet du faisceau lumineux.

## Patentansprüche

1. Head-up-Display-Vorrichtung (1; 100) umfassend:
- eine Bilderzeugungseinheit (3), die ausgelegt ist, ein Lichtbündel abzugeben, das dazu bestimmt ist, am Ausgang der Head-up-Display-Vorrichtung (1; 100) in Richtung einer teilweise transparenten Scheibe (2) projiziert zu werden,
- eine Flüssigkristallzelle (7; 17), die auf dem Weg des Lichtbündels angeordnet ist,
wobei die Bilderzeugungseinheit (3) einen Ausgangspolarisator (330) und einen Flüssigkristallschirm (31), der den Ausgangspolarisator aufweist, enthält,
**dadurch gekennzeichnet, dass** sie einen Polarisationsfilter (5; 15) aufweist, der auf dem Weg des Lichtbündels zwischen der Bilderzeugungseinheit (3) und der Flüssigkristallzelle (7; 17) eingefügt ist,
dadurch, dass die Flüssigkristallzelle (7; 17) um einen ersten Winkel ungleich null (α) bezogen auf eine Erstreckungsebene des Schirms (31) geneigt ist,
und dadurch, dass der Polarisationsfilter (5; 15) um einen zweiten Winkel ungleich null () bezogen auf die Erstreckungsebene des Schirms (31) geneigt ist.

2. Head-up-Display-Vorrichtung (1; 100) nach Anspruch 1, wobei der Polarisationsfilter (5; 15) gegenüber dem Polarisationsfilter (330) platziert ist.

3. Head-up-Display-Vorrichtung (1; 100) nach einem der Ansprüche 1 bis 2, wobei mindestens eine Übertragungsachse des Polarisationsfilters (5; 15) und mindestens eine Übertragungsachse des Ausgangspolarisators (330) ausgerichtet sind.

4. Head-up-Display-Vorrichtung (1; 100) nach einem der Ansprüche 1 bis 3, wobei der Polarisationsfilter (5) und die Flüssigkristallzelle (7) aneinandergefügt sind.

5. Head-up-Display-Vorrichtung (1; 100) nach einem der Ansprüche 1 bis 4, wobei mindestens eine Fläche der Flüssigkristallzelle (7; 17) eine Antireflexionsschicht trägt.

6. Head-up-Display-Vorrichtung (1; 100) nach einem der Ansprüche 1 bis 5, wobei der Abstand zwischen der Bilderzeugungseinheit (3) und dem Polarisationsfilter (5; 15) über 2 mm beträgt.

7. Head-up-Display-Vorrichtung (1; 100) nach einem der Ansprüche 1 bis 6, wobei mindestens eine Fläche des Polarisationsfilters (5; 15) eine Antireflexionsschicht trägt.

8. Head-up-Display-Vorrichtung (1; 100) nach einem der Ansprüche 1 bis 7, wobei die Vorrichtung (1; 100) mindestens einen Spiegel (8; 9) aufweist, der auf dem Weg des Lichtbündels angeordnet ist.

9. Head-up-Display-Vorrichtung (1; 100) nach Anspruch 8, wobei der Spiegel (8; 9) eine Oberflächenbehandlung aufweist, die die Absorption der Infrarotstrahlung gestattet.

10. Head-up-Display-Vorrichtung (1; 100) nach einem der Ansprüche 8 und 9, wobei die Flüssigkristallzelle (7; 17) zwischen dem Polarisationsfilter (5; 15) und dem Spiegel (8; 9) auf dem Weg des Lichtbündels platziert ist.

11. Head-up-Display-Vorrichtung (1; 100) nach einem der Ansprüche 8 und 9 in Abhängigkeit von einem der Ansprüche 1 bis 3 und 5 bis 7, wobei der Spiegel zwischen dem Polarisationsfilter und der Flüssigkristallzelle auf dem Weg des Lichtbündels platziert ist.

## Claims

1. Head-up display device (1; 100) comprising:
- an image generation unit (3) designed to emit a light beam, intended to be projected at the output of the head-up display device (1; 100) towards a partially transparent plate (2),
- a liquid crystal cell (7; 17) disposed on the path of said light beam,
wherein the image generation unit (3) comprises an output polarizer (330) and a liquid crystal screen (31) comprising said output polarizer,
**characterized in that** it comprises a polarizing filter (5; 15), interposed on the path of said light beam between the image generation unit (3) and the liquid crystal cell (7; 17),
**in that** the liquid crystal cell (7; 17) is inclined by a first non-zero angle (α) with respect to a plane of extension of the screen (31),
and **in that** the polarizing filter (5; 15) is inclined by a second non-zero angle (β) with respect to the plane of extension of the screen (31).

2. Head-up display device (1; 100) according to Claim 1, wherein the polarizing filter (5; 15) is placed facing said output polarizer (330).

3. Head-up display device (1; 100) according to either one of Claims 1 and 2, wherein at least one transmission axis of the polarizing filter (5; 15) and at least one transmission axis of the output polarizer (330) are aligned.

4. Head-up display device (1; 100) according to any one of Claims 1 to 3, wherein the polarizing filter (5) and the liquid crystal cell (7) are attached.

5. Head-up display device (1; 100) according to any one of Claims 1 to 4, wherein at least one face of the liquid crystal cell (7; 17) has an antireflection layer.

6. Head-up display device (1; 100) according to any one of Claims 1 to 5, wherein the distance between the image generation unit (3) and the polarizing filter (5; 15) is greater than 2 mm.

7. Head-up display device (1; 100) according to any one of Claims 1 to 6, wherein at least one face of the polarizing filter (5; 15) has an antireflection layer.

8. Head-up display device (1; 100) according to any one of Claims 1 to 7, wherein said device (1; 100) comprises at least one mirror (8; 9), interposed on the path of said light beam.

9. Head-up display device (1; 100) according to Claim 8, wherein said mirror (8; 9) comprises a surface treatment allowing absorption of the infrared radiation.

10. Head-up display device (1; 100) according to either one of Claims 8 and 9, wherein the liquid crystal cell (7; 17) is placed between the polarizing filter (5; 15) and the mirror (8; 9) on the path of the light beam.

11. Head-up display device (1; 100) according to either one of Claims 8 and 9 taken as dependent on any one of Claims 1 to 3 and 5 to 7, wherein the mirror is placed between the polarizing filter and the liquid crystal cell on the path of the light beam.
